# EUROPEAN PATENT APPLICATION

(11) **EP 4 838 122 A1**
(43) Date of publication of application: **11.11.2026**
(21) Application number: 24758433.7
(22) Date of filing: 12.06.2024
(51) Int. Cl.: F16L 13/14, F16L 21/02, F16L 37/092, F16L 25/12

(54) **PIPE CONNECTING DEVICE**

(30) Priority: 02.01.2024 KR 20240000218
(71) Applicant: Jungwoo Metal Ind. Co., Ltd., Yangju-si, Gyeonggi-do 11407 (KR)
(72) Inventor: PARK, Jae Hong, Uijeongbu-si Gyeonggi-do 11727 (KR); LEE, Sang Guen, Yangju-si Gyeonggi-do 11444 (KR); JOO, Hyoung Jun, Yangju-si Gyeonggi-do 11470 (KR); LEE, Dae Hyun, Dongducheon-si Gyeonggi-do 11351 (KR)
(74) Representative: Ter Meer und Partner mbB
(86) International application number: PCT/KR2024/008064
(87) International publication number: WO 2025/146880

(57) **Abstract**

A pipe connecting device according to the present invention includes a fitting unit which has a constant length, with an insertion port formed on both sides into which a pipe is inserted, an insertion space formed inside, and a first seating groove formed on both sides adjacent to the insertion port and a second seating groove formed to be spaced on the inside of the first seating groove, each formed around an inner circumferential surface; a grip member which is provided in either the first seating groove or the second seating groove, and presses and fixes the pipe; and a sealing member which is provided in the remaining one at which the grip member is not located among the first seating groove or the second seating groove, and maintains airtightness between the fitting unit and the pipe, wherein the grip member is made up of an integral member in which a plate material with a constant width along an insertion direction of the pipe has a constant curvature to form an arcuate shape, and a seating part that seats on the first seating groove or the second seating groove, and a grip part that extends in an inward direction from the seating part are repeatedly provided.

## Description

### Technical Field

The present invention relates to a pipe connecting device, and more specifically, to a pipe connecting device that firmly connects a pair of pipes to each other to maintain airtightness.

### Background Art

Pipe connectors are generally used to connect various kinds of pipes constructed in the fields of construction and civil engineering, and such pipe connectors are formed in various shapes depending on the size and type of the pipe.

In the case of a large-diameter pipe connector, an accommodation space is formed inside a connector into which the pipe is inserted, and an index ring and a grip ring are provided in the accommodation space. As a result, after the pipe is inserted inside the connector, the grip ring is compressed so that it penetrates an outer surface of the pipe to fix the pipe.

In the case of a small-diameter pipe connector, a method is used in which the index ring is inserted inside the connector into which the pipe is inserted, and then the pipe is inserted and connected. In such a case, the index ring presses the outer surface of the pipe to prevent leakage of fluid flowing to the inside of the pipe.

However, in the conventional small-diameter pipe connectors described above, because the index ring is formed to have elasticity, a shape deformation occurs easily due to a load of the pipe, an angle change due to external force, etc., making it difficult to stably fix the pipe.

Although a separate fixing device has been installed at a connection part between the pipes to compensate for this problem, this not only makes the installation cumbersome, but also increases the time and cost required for construction.

Therefore, a method for solving such problems is required.

### Prior Art Document

### Patent Document

Korean Utility Model Registration No. 20-0382023

### Disclosure

### Technical Problem

The present invention is devised to solve the problems of the above-mentioned related art, and an object thereof is to provide a pipe connecting device that can greatly improve the index force and firmly fix the pipe.

In addition, another object is to provide a pipe connecting device that is simple in configuration and easy to install.

The objects of the present invention are not limited to the above-mentioned objects, and other objects not mentioned will be clearly understood by those skilled in the art from the following description.

### Technical Solution

A pipe connecting device of the present invention for achieving the above objects includes a fitting unit which has a constant length, with an insertion port formed on both sides into which a pipe is inserted, an insertion space formed inside, and a first seating groove formed on both sides adjacent to the insertion port and a second seating groove formed to be spaced on the inside of the first seating groove, each formed around an inner circumferential surface; a grip member which is provided in either the first seating groove or the second seating groove, and presses and fixes the pipe; and a sealing member which is provided in the remaining one at which the grip member is not located among the first seating groove or the second seating groove, and maintains airtightness between the fitting unit and the pipe, wherein the grip member is made up of an integral member in which a plate material with a constant width along an insertion direction of the pipe has a constant curvature to form an arcuate shape, and a seating part that seats on the first seating groove or the second seating groove, and a grip part that extends in an inward direction from the seating part are repeatedly provided.

The grip member may seat on the first seating groove, and may be formed so that a circumference is partially opened to have a non-closed shape, thereby reducing a diameter by pressure applied to an outer circumferential surface of the fitting unit to compress the pipe.

The grip member may be pressed in a manner in which the circumference is reduced, may move to the first seating groove or the second seating groove and expands, and the fitting unit may be compressed with the pipe inserted into the insertion port.

The grip member may be configured so that an elastic limit is not exceeded by deformation, and may be configured to have an elastic restoring force in a radially outward direction.

The grip member may be formed so that a curvature of an initial state is relatively smaller than inner diameters of the first seating groove and the second seating groove.

The grip member may be configured to be able to contract into a circular shape with a diameter smaller than the insertion port.

The grip member may have a width smaller than the widths of the first seating groove and the second seating groove along a longitudinal direction, and may be deformed along a tensile direction when the pipe is pulled in a direction of leaving from the fitting unit.

A tip of the grip part may be formed so that an inner side is longer than an outer side in the pipe direction to be inserted, and may be formed in a tapered shape.

The grip part may be formed so that a portion protruding toward the pipe has a polygonal or semicircular shape.

The sealing member may be formed to have elasticity, seated in the second seating groove, and formed in a ring shape.

A longitudinal section of the sealing member may include a main sealing region of a preset shape.

The longitudinal section of the sealing member may further include an auxiliary sealing region that protrudes outward from the main sealing region.

The fitting unit may include a first member mounting part with the first seating groove formed on an inner circumferential surface; a second member mounting part with the second seating groove formed on an inner circumferential surface; a groove separation part formed between the first member mounting part and the second member mounting part; and an internal extension formed to extend inward from the second member mounting part.

The fitting unit may further include an external extension that extends outward from the first member mounting part.

The first member mounting part and the second member mounting part may be formed to have an outer diameter larger than the groove separation part and the internal extension.

The pipe connecting device may further include a pressing unit which is mounted to wrap around and press the outer circumferential surface of the fitting unit.

The pressing unit may have a seating space formed therein into which the fitting unit is inserted, and may include a pressing body that wraps around and presses the outer circumferential surface of the fitting unit.

The first member mounting part and the second member mounting part may be formed to have an outer diameter larger than the groove separation part and the inner extension, and the pressing body may be formed with a first recessed groove in which the first member mounting part is seated, and a second recessed groove in which the second member mounting part is seated, along periphery of the inner circumferential surface.

### Advantageous Effects

The pipe connecting device of the present invention for solving the above problems has the following effects.

First, there are advantages that the pipe can be stably fixed by a grip member and a sealing member that are brought into contact with each pipe fixed to the fitting unit, and the airtightness can be greatly improved.

Second, the grip member of the present invention is made of an elastic material, and a part of the periphery is not connected, and it is configured to be stably contracted and expanded in a circumferential direction. Accordingly, the grip member can be easily inserted into the fitting unit and can stably pressurize the pipes.

Third, since no separate fixing device or the like is provided, the configuration is simple and the installation method is very easy, which has an advantage of greatly reducing the time and cost required for construction.

The effects of the present invention are not limited to the above effects, and other effects not mentioned will be clearly understood by those skilled in the art from the description of the claims.

### Description of Drawings

FIG. 1 is a diagram showing an appearance of a pipe connecting device according to an embodiment of the present invention.
FIG. 2 is a diagram showing an internal structure of the pipe connecting device according to an embodiment of the present invention.
FIG. 3 is a diagram showing the appearance of a fitting unit in the pipe connecting device according to an embodiment of the present invention.
FIGS. 4 and 5 are diagram showing the appearance of a grip member in the pipe connecting device according to an embodiment of the present invention.
FIG. 6 is a diagram showing a state in which a grip member is coupled to the fitting unit in the pipe connecting device according to an embodiment of the present invention.
FIG. 7 is a diagram showing the appearance of a sealing member in the pipe connecting device according to an embodiment of the present invention.
FIG. 8 is a diagram showing an appearance of a pressing unit in the pipe connecting device according to an embodiment of the present invention.
FIG. 9 is a diagram showing an appearance of the pressing unit attached to the fitting unit in the pipe connecting device according to an embodiment of the present invention.
FIGS. 10 and 11 are diagrams showing a deformed shape of the grip unit when a pipe is pulled outward in the pipe connecting device of the present invention.
FIGS. 12 and 13 are diagrams showing another embodiment of the fitting unit in the pipe connecting device of the present invention.

### Best Mode

Hereinafter, a preferred embodiment of the present invention that can specifically realize the object of the present invention will be described with reference to the attached drawings. In describing this embodiment, the same names and symbols are used for the same components, and additional explanations associated therewith will be omitted.

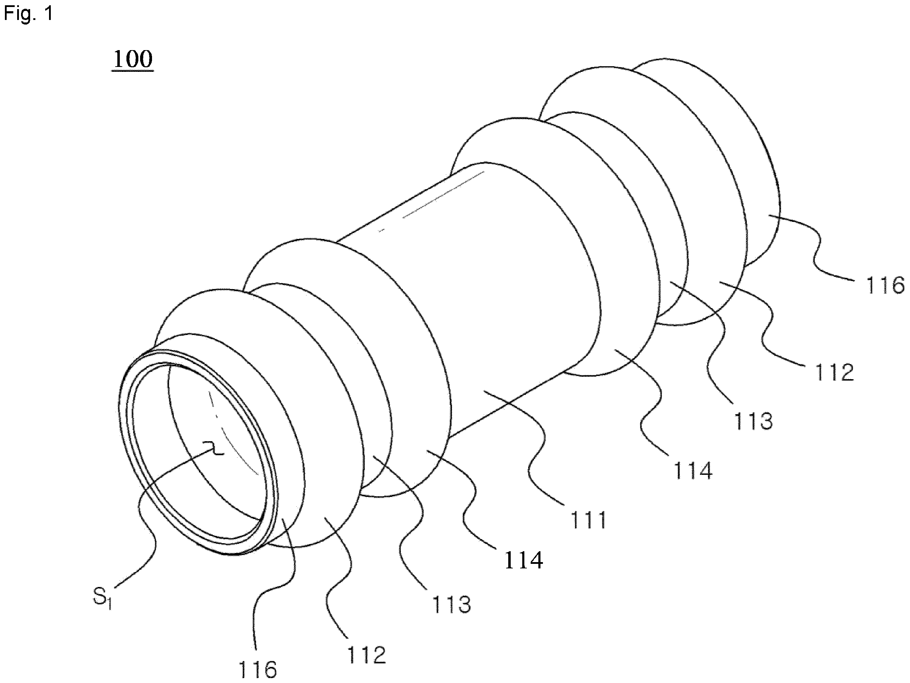

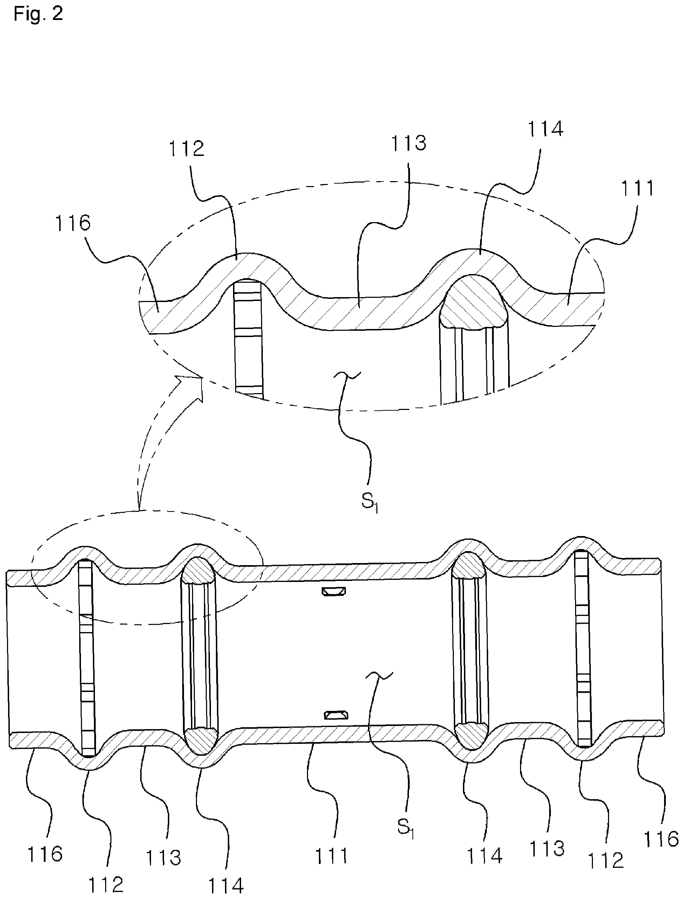

FIG. 1 is a diagram showing an appearance of a pipe connecting device according to an embodiment of the present invention, and FIG. 2 is a diagram showing an internal structure of the pipe connecting device according to the embodiment of the present invention.

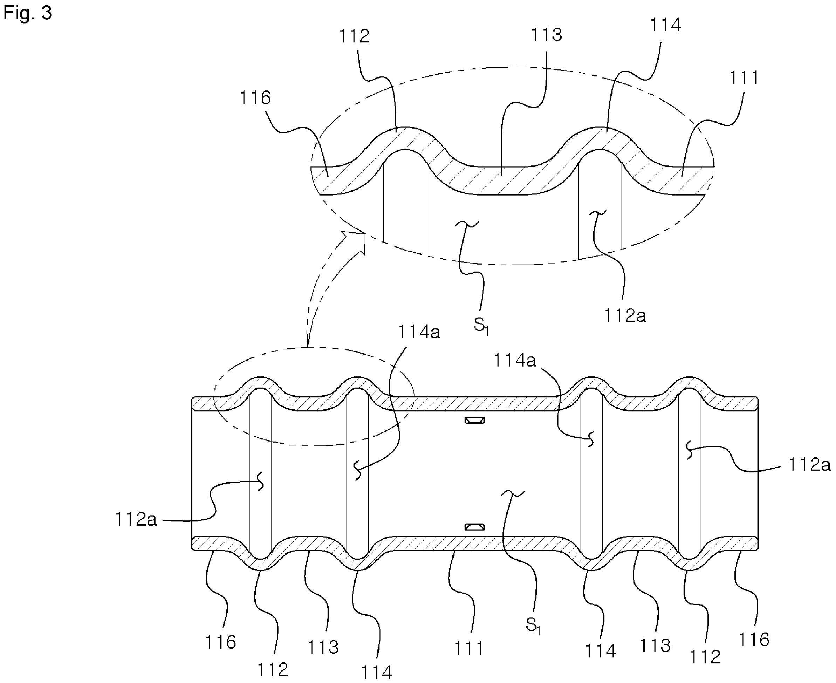

FIG. 3 is a diagram showing the appearance of a fitting unit in the pipe connecting device according to an embodiment of the present invention.

FIG. 1 is a diagram showing the appearance of the pipe connecting device according to an embodiment of the present invention.

As shown in FIGS. 1 to 3, the pipe connecting device according to an embodiment of the present invention includes a fitting unit 100, a grip member 200, and a sealing member 300.

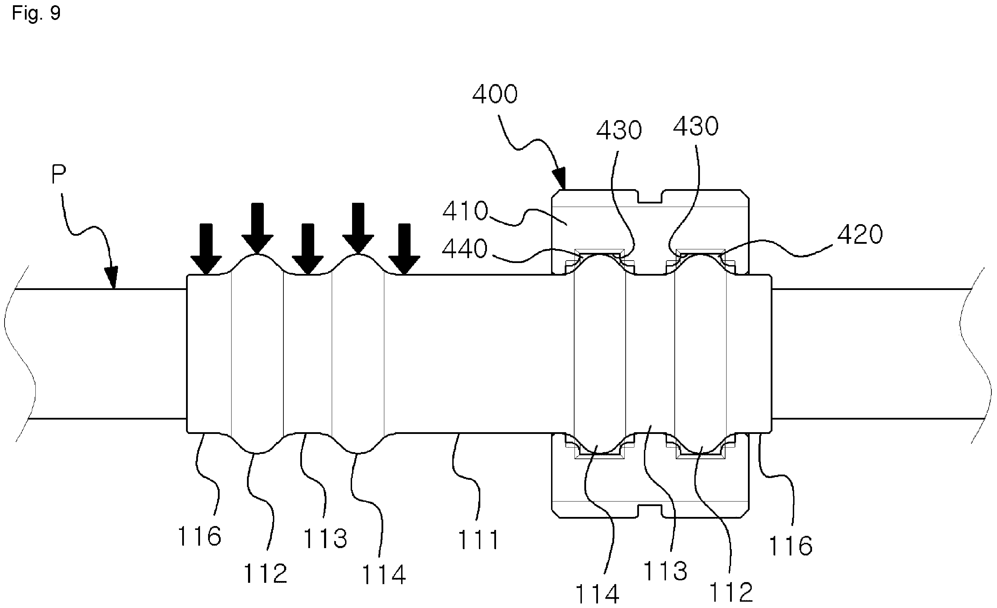

The fitting unit 100 has an insertion space S1 formed therein so that different pipes (see FIG. 9) can be inserted on both sides, and is formed in a tubular shape as a whole.

In particular, in the case of this embodiment, the fitting unit 100 has a certain length, has insertion ports formed on both sides, has a shape symmetrical in both directions on the basis of a center line along a longitudinal direction, and forms the hollow insertion space S1 inside.

Further, on both sides of the fitting unit 100, a first seating groove 112a disposed adjacent to the insertion port, and a second seating groove 114a formed to be spaced apart from the first seating groove 112a in an inward direction are formed along the periphery of the inner circumferential surface. At this time, either the grip member 200 or the sealing member 300 is provided in the first seating groove 112a, and the remaining one is provided in the second seating groove 114a.

More specifically, in this embodiment, the fitting unit 100 has a shape that includes a first member mounting part 112 having the first seating groove 112a formed on its inner circumferential surface, a second member mounting part 114 having the second seating groove 114a formed on its inner circumferential surface, a groove separation part 113 formed between the first member mounting part 112 and the second member mounting part 114, an internal extension 111 that extends inward from the second member mounting part 114 and formed in the center of the fitting unit 100, and an external extension 116 extending outward from the first member mounting part 112.

That is, the fitting unit 100 has a shape in which the internal extension 111, the second member mounting part 114, the groove separation part 113, and the first member mounting part 112, and the external extension 116 are connected in sequence in the outward direction from the center along the longitudinal direction.

In this embodiment, the first member mounting part 112 and the second member mounting part 114 are formed to have an outer diameter larger than those of the groove separation part 113, the external extension 116, and the internal extension 111. As a result, the fitting unit 100 is formed in a tubular shape as a whole, and has a shape in which a plurality of protrusions are formed on the outer circumferential surface.

In the case of this embodiment, the fitting unit 100 has the first member mounting part 112 and the second member mounting part 114 each formed on both sides, but the present invention is not limited thereto, and a plurality of the first member mounting parts 112 and the second member mounting parts 114 may be formed. In such a case, a plurality of grip members 200 or sealing members 300 may also be provided.

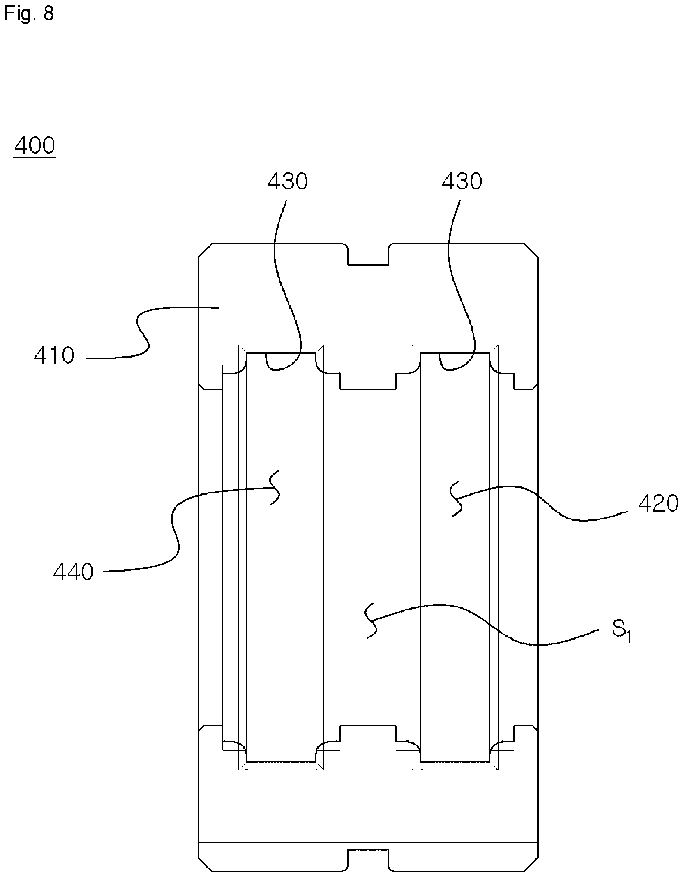

In addition, in this embodiment, the length of the internal extension 111 may be formed to be longer than the length of the groove separation part 113. The reason for this is to form a wider internal space in the internal extension 111 and prevent a tip of the pipe P inserted into the fitting unit 100 from being deformed by the pressing force of a pressing unit 400 (see FIG. 8) to be described below.

In addition, a protrusion protruding to a predetermined height may be formed on the inner circumferential surface of the center of the fitting unit 100. This is to limit the maximum insertion depth of the pipe P.

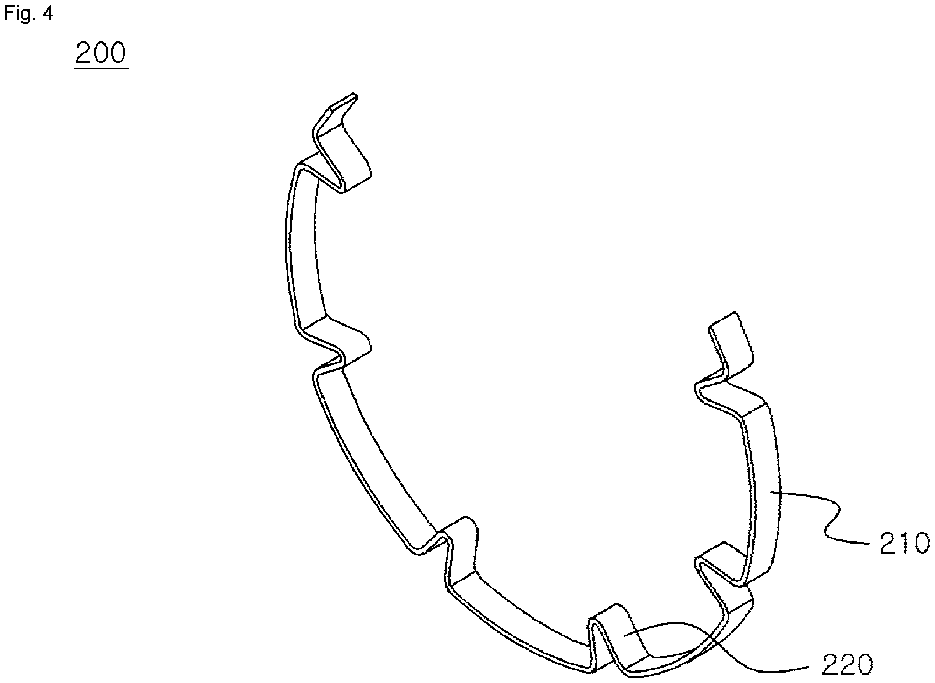

Referring to FIGS. 4 to 6, the grip member 200 in the pipe connecting device according to an embodiment of the present invention will be described as follows.

In the present invention, the grip member 200 is a component that is provided in either the first seating groove 112a or the second seating groove 114a to press and fix the pipe P.

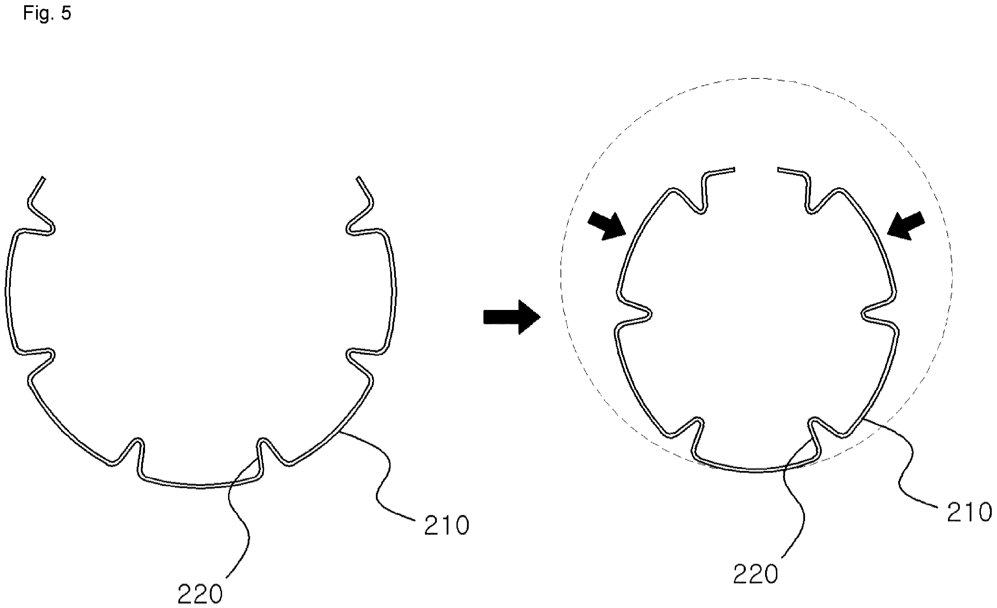

As shown in FIGS. 4 and 5, the grip member 200 is seated in the first seating groove 112a, and is formed in a shape having a partially open circumference and an unclosed shape. That is, the grip member 200 is formed in an unfinished ring shape with an opening formed in a part of the entire circumference.

As a result, the grip member 200 can be deformed and reduced in diameter by pressure applied to the outer circumferential surface of the fitting unit 100, and can press and fix the pipe P inserted into the fitting unit 100.

At this time, the grip member 200 is made up of an integrated member in which a plate material having a certain width along an insertion direction of the pipe P has an arcuate shape with a certain curvature, and the seating part 210 seated in the first seating groove 112a and the grip part 220 extending from the seating part 210 in the inward direction are repeatedly provided.

The grip part 220 is a portion that protrudes toward the pipe P, and when the pipe P is inserted into the fitting unit 100, it wraps around and comes into contact with the outer surface of the pipe P, and then is configured to be compressed, deformed and pressed.

At this time, in the grip part 220, the portion that protrudes toward the pipe P is formed in various shapes, such as a polygonal or semicircular shape.

The seating part 210 is formed in a non-closed circular shape configured so that the grip part 220 has a certain interval and can maintain a stable shape. At this time, the seating part 210 has a certain degree of elasticity or more, and recovers to an initial state through a restoring force when deformed.

In other words, the grip member 200 is formed by repeatedly forming the seating part 210 and the grip part 220 by bending a plate-shaped member made of a metal material, and is seated in the first seating groove 112a.

Specifically, as shown in FIG. 5, as the grip member 200 is formed to have a partially open circumference and a non-closed shape, the diameter is reduced by the pressure applied to the outer circumferential surface of the fitting unit 100, and the grip member 200 is formed to compress the pipe P.

At this time, the grip member 200 has a certain level of elasticity and can be compressed along the circumference, and is restored by its elasticity when the external force is released.

As a result, the grip member 200 according to the present invention is pressed into a shape in which its circumference is reduced, and moves to the first seating groove 112a or the second seating groove 114a and expands to seat therein.

Thereafter, when the pipe P flows into the insertion space S1 through the insertion port, the grip member 200 is disposed to wrap around the pipe P while being seated in the first seating groove 112a.

The grip member 200 thus configured has a certain level of elasticity and is configured to deform, but is configured not to exceed the elastic limit by deformation, and has an elastic restoring force in the radially outward direction.

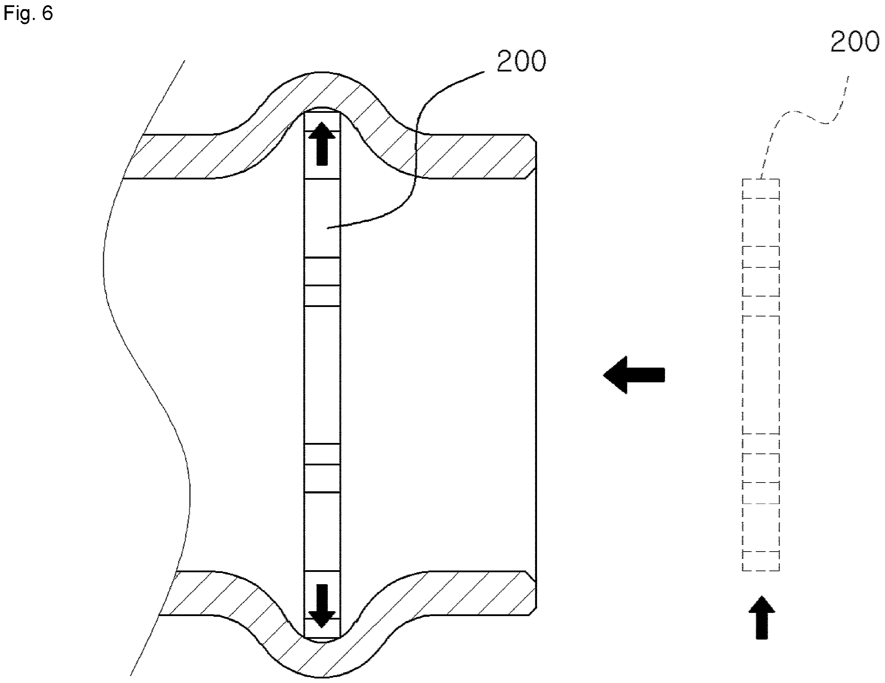

Next, referring to FIG. 6, looking at the state in which the grip member 200 is seated inside the fitting unit 100, first, as shown in FIG. 5, the grip member 200 is pressed by an external force and its circumference is reduced. Here, the grip member 200 is formed to have a curvature of the state of the reduced circumference relatively larger than the inner diameter of the first seating groove 112a and the second seating groove 114a, and is contracted to a circular shape with a diameter smaller than the insertion port.

Then, the grip member 200 thus contracted passes through the insertion port in that state, is positioned inside the first seating groove 112a, and is expanded by the restoring force.

At this time, the grip member 200 expands inside the seating groove with a curvature of the initial state formed to be relatively smaller than the inner diameter of the first seating groove 114a and the second seating groove 114b. The grip member 200 is disposed in a partially contracted state and is continuously pressed in a direction in which the circumference expands due to the restoring force.

As a result, the expanded state of the grip member 200 is continuously applied with the restoring force to the outside so the compressed state corresponding to the inner diameter of the first seating groove 112a can be maintained.

Because the grip member 200 is configured in this manner, it can be inserted in a compressed state outside the fitting unit 100, and then expanded in the first seating groove 112a or the second seating groove 114a, so that it can be disposed to stably wrap around the circumference even when the pipe P is inserted later through the insertion port.

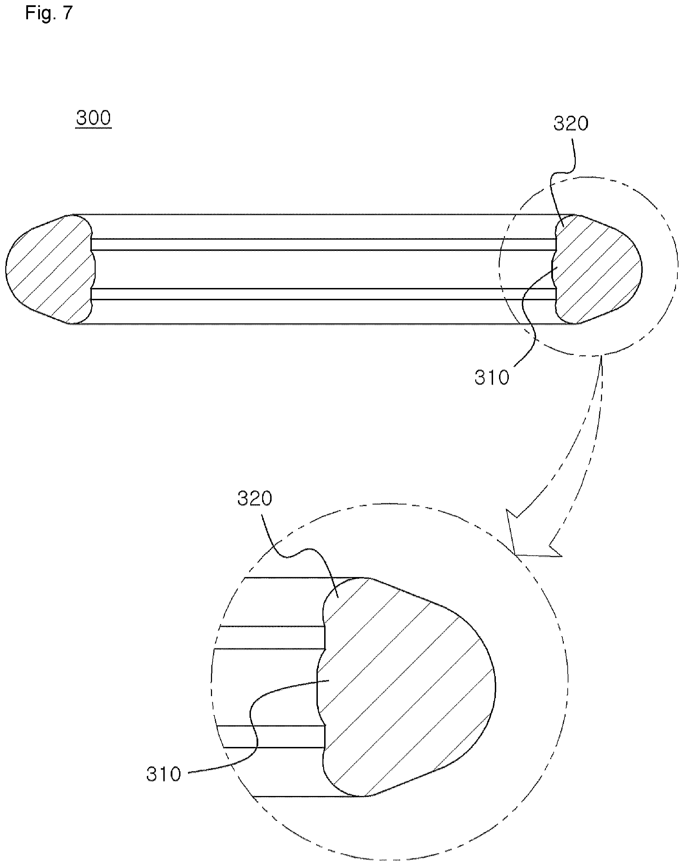

Next, the sealing member 300 in the pipe connecting device according to an embodiment of the present invention will be described referring to FIG. 7.

The sealing member 300 according to the present invention is a component that is provided in the first seating groove 112a or the second seating groove 114a and maintains airtightness between the fitting unit 100 and the pipe P.

Specifically, the sealing member 300 is made up of at least one member and is configured to wrap and seal the outer circumferential surface of the pipe P. The sealing member 300 is seated inside the second seating groove 114a and disposed to be spaced apart from the grip member 200.

The reason why the sealing member 300 is disposed inside the grip member 200 is to prevent the fluid flowing between the pipes P from leaking toward the grip member 200 side. That is, the sealing member 300 is disposed close to the center side of the fitting unit 100, and plays a role in preventing the leakage of the fluid.

As shown in FIG. 7, the sealing member 300 is formed to have elasticity, is seated in the second seating groove 114a, and is formed in a ring shape as a whole.

Specifically, the sealing member 300 can include a main sealing region 310 having a shape preset on the basis of the longitudinal section, and an auxiliary sealing region 320 protruding outward from the main sealing region 310.

In the case of this embodiment, the main sealing region 310 is formed to have a circular shape, and a pair of auxiliary sealing regions 320 have a shape protruding on both sides of the main sealing region 310. Such a longitudinal section shape allows the sealing member 300 to adhere more strongly to the pipe P, thereby improving the index force.

In general, scratches may occur in the pipes P during manufacture, transportation, and use at the construction site, and the tolerance for this is said to be 22% of the tube thickness. However, because it is sensitive to index force and durability when applied to an actual product, if it has a scratch of 22% thickness, there is a problem of difficulty in maintaining the desired index force.

In particular, among the fluids passing through the pipe P, refrigerants (such as helium) used in air conditioners are sensitive to scratches, which increases the possibility of leakage.

As a result, the scratch of 22% thickness when using an actual product is not allowed, but stricter standards are applied.

However, since the auxiliary sealing region 320 is provided in addition to the main sealing region 310, as in the sealing member 300 of the present invention, the pressure force with the pipe P increases, and index force can be maintained.

In other words, the present invention has the effect of maintaining index force even if the pipe P has a scratch.

As described above, the pipe connecting device according to the present invention includes the fitting unit 100, the grip member 200, and the sealing member 300 described above. After the grip member 200 and the sealing member 300 are seated in the first seating groove 112a and the second seating groove 114a of the fitting unit 100, respectively, the pipe P is inserted through the insertion ports on both sides.

Then, the fitting unit 100 is pressed by a separate pressing unit 400, crimps and deforms the outer surface of the pipe P together with the grip member 200, and can maintain an engaged state without leaving.

At this time, the grip member 200 of the present invention is made of an elastic material, has a partially unconnected circumference, and is configured to be able to stably contract and expand in the circumferential direction. Accordingly, the grip member 200 can be easily inserted when inserted into the fitting unit 100, and can stably press the pipe P.

In addition, the grip member 200 can be produced with a simple structure by bending a plate-shaped material to mold the seating part 210 and the grip part 220, and can press the pipe P, while having the elastic restoring force.

Furthermore, since the pipe connecting device according to the present invention does not have a separate fixing device, the configuration is simple, and the installation method is very easy. Accordingly, there is an advantage that the construction time and cost can be significantly reduced.

Next, the structure of the pressing unit 400 according to the present invention will be described as follows referring to FIGS. 8 and 9.

FIG. 8 is a diagram showing the appearance of the pressing unit 400 in the pipe connecting device according to an embodiment of the present invention, and FIG. 9 is a diagram showing the appearance in which the pressing unit 400 is mounted in the fitting unit 100 in the pipe connecting device according to an embodiment of the present invention.

As shown in FIGS. 8 and 9, the pipe connecting device according to an embodiment of the present invention further includes a pressing unit 400.

The pressing unit 400 is a component that is mounted to wrap around the outer circumferential surface of the fitting unit 100, deforms the grip member 200 provided inside the fitting unit 100 by pressing it, and applies pressure to the pipe P for strongly restraining the pipe P.

In this embodiment, the pressing unit 400 has a seating space S2 formed therein into which the grip member 200 is inserted, and includes a pressing body 410 that wraps and presses the outer circumferential surface of the grip member 200.

The pressing body 410 has a first recessed groove 420 in which the first member mounting part 112 of the fitting unit 100 is seated, and a second recessed groove in which the second member mounting part 114 is seated, which are formed along the periphery of the inner circumferential surface.

Therefore, in the state of being mounted on the fitting unit 100 as in FIG. 9, the pressing body 410 comes into contact with each of the inner extension 111, the second member mounting part 114, the groove separation part 113, the first member mounting part 112, and the outer extension 116, to apply the pressing force. The pressing unit 400 of this type can increase the fastening force so that the first pipe P or the second pipe P does not leave.

In particular, in this embodiment, the pressing unit 400 is formed to press only a part of the inner extension 111, and can prevent the tip of the pipe P from being deformed.

In addition, the inner circumferential surface 430 of the first recessed groove 420 and the second recessed groove 440 can have various cross-sectional shapes. In the case of this embodiment, the cross section of the inner circumferential surface 430 of the first recessed groove 420 and the second recessed groove 440 has a shape formed to be flat.

The pressing unit 400 thus configured is divided into a plurality of members, and the pressing body 410 simultaneously presses the fitting unit 100 while wrapping around the circumference thereof, thereby simultaneously pressing the inner extension 111, the second member mounting part 114, the groove separation part 113, the first member mounting part 112, and the external extension 116 as shown in FIG. 9 so that the grip member 200 stably presses the pipe P.

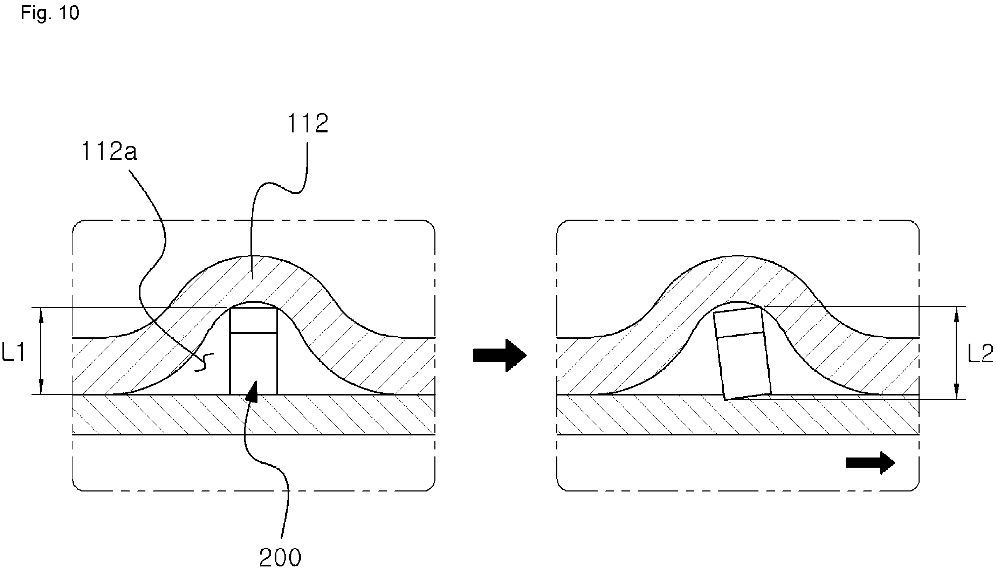

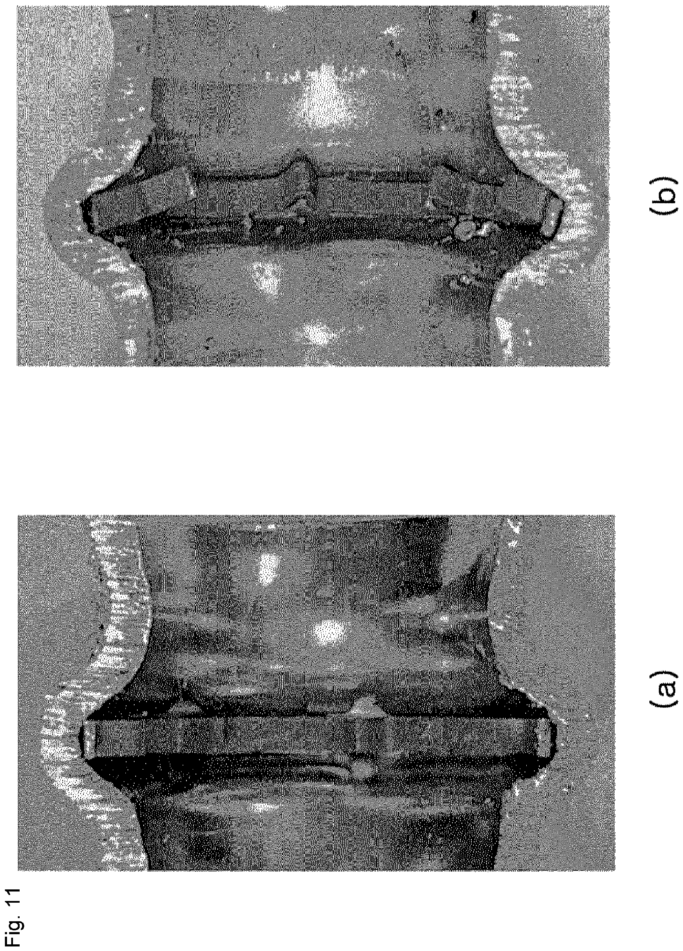

Next, a structure of the present invention that prevents the pipe P seated on the fitting unit 100 from escaping to the outside will be described referring to FIGS. 10 and 11.

As shown in the drawings, the pipe P is inserted into the insertion space S1 in the state in which the grip member 200 seated inside the first recessed groove and the uppermost end and the lowermost end of the grip member 200 are disposed with a length of L1.

At this time, the grip member 200 has a width smaller than the width of the first seating groove 112a and the second seating groove 114a along the longitudinal direction, and has a space in which a certain angle of twisting may occur when an external force acts in the longitudinal direction of the fitting unit 100 in a seated state.

Further, when the pipe P is pulled in a direction in which it leaves the fitting unit 100, it deforms along the tensile direction.

Here, when the fitting unit 100 is deformed, a portion that comes into contact with the pipe P moves along the tensile direction, and at the same time, a part thereof digs into the outer surface of the pipe P to prevent the fitting unit 100 from leaving.

As shown specifically, when the fitting unit 100 twists along the tensile direction, the length along the vertical direction has a length L2 that is relatively longer than L1, which is the basic state, due to twisting and deformation. As a result, the grip part 220 is dug toward the inner surface of the pipe P by the amount of the increase in the length along the vertical direction, thereby suppressing the pipe P from leaving.

This can be seen from the diagram shown in FIG. 10, which shows the deformed shape of the grip member 200 through actual experiments, and the grip member 200 deforms to prevent the pipe P from leaving.

The case of FIG. 10(a) simply shows a state in which the grip member 200 is not deformed, and the case of FIG. 10(b) shows a state in which the grip member 200 is deformed in the direction of separation of the pipe P and its height in the vertical direction increases.

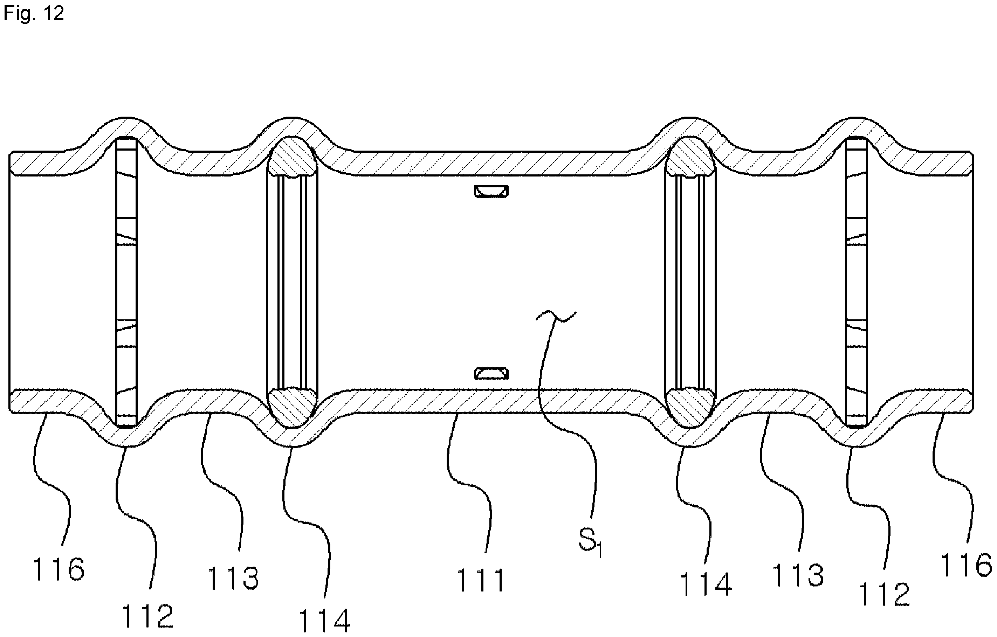

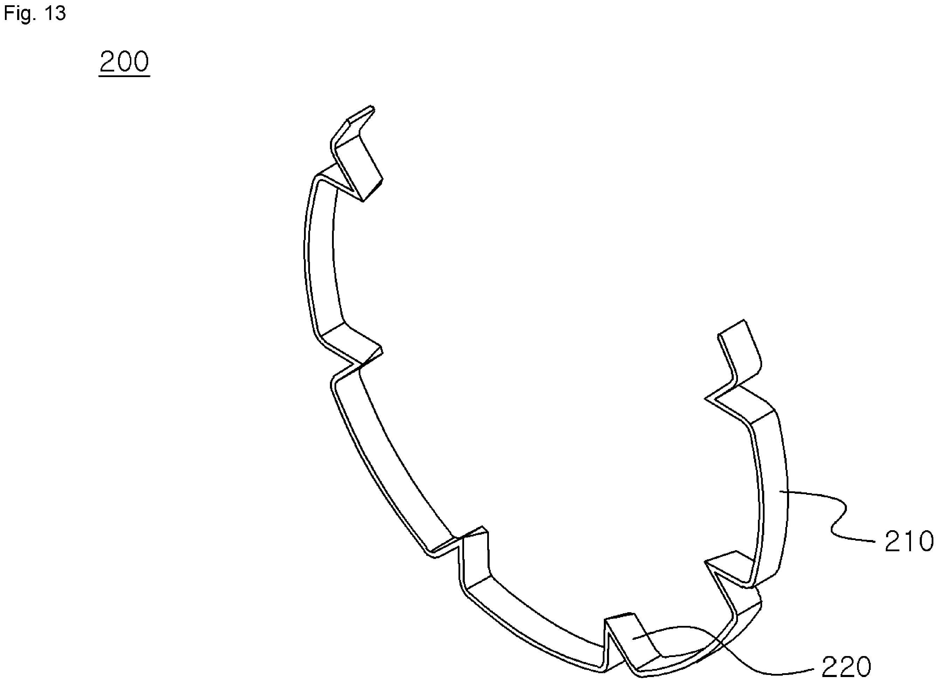

Next, a description will be given of the deformed form of the grip member 200 according to the present invention referring to FIGS. 12 and 13.

As can be seen from the diagrams shown, the basic form of the grip member 200 is the same as that described above, but the shape of the protruding grip part 220 is different.

Specifically, the tip of the grip part 220 has a tapered shape in which the inside is formed to be longer than the outside in a direction of the pipe P to be inserted. At this time, the seating part 210 is formed in the same shape, the circumference is reduced in a pressed shape, and the seating part 210is seated inside the first seating groove 112a.

Here, as shown, the tip of the grip part 220 comes into contact with the outer surface of the pipe P, and when the pipe P is inserted into the fitting unit 100, interference is minimized, and in contrast, when leaving, the protruding portion is configured to press the outer surface of the pipe P to suppress coming-off.

In other words, the grip part 220 is formed so that the protruding length increases toward the inside of the fitting unit 100, and it can maintain a stable engaged state with the pipe P.

While preferred embodiments of the invention have been shown and described above, the invention is not to be limited to the particular embodiments described above, but rather can be modified without departing from the scope of the invention as claimed in the appended claims. It goes without saying that various modifications can be made by those who have ordinary knowledge in the technical field to which the invention belongs, and such modifications should not be understood separately from the technical idea or perspective of the present invention.

### Description of symbols

100: Fitting unit
111: Inner extension
112: First member mounting part
113: Groove separation part
114: Second member mounting part
116: Outer extension
200: Grip member
210: Seating part
220: Grip part
300: Sealing member
310: Main sealing region
320: Auxiliary sealing region
400: Pressing unit
410: Pressing body
420: First recessed groove
430: Inner circumferential surface
440: Second recessed groove

## Claims

1. A pipe connecting device, comprising:
a fitting unit which has a constant length, with an insertion port formed on both sides into which a pipe is inserted, an insertion space formed inside, and a first seating groove formed on both sides adjacent to the insertion port and a second seating groove formed to be spaced on the inside of the first seating groove, each formed around an inner circumferential surface;
a grip member which is provided in either the first seating groove or the second seating groove, and presses and fixes the pipe; and
a sealing member which is provided in the remaining one at which the grip member is not located among the first seating groove or the second seating groove, and maintains airtightness between the fitting unit and the pipe,
wherein the grip member is made up of an integral member in which a plate material with a constant width along an insertion direction of the pipe has a constant curvature to form an arcuate shape, and a seating part that seats on the first seating groove or the second seating groove, and a grip part that extends in an inward direction from the seating part are repeatedly provided.

2. The pipe connecting device according to claim 1,
wherein the grip member seats on the first seating groove, and is formed so that a circumference is partially opened to have a non-closed shape, thereby reducing a diameter by pressure applied to an outer circumferential surface of the fitting unit to compress the pipe.

3. The pipe connecting device according to claim 2,
wherein the grip member is pressed in a manner in which the circumference is reduced, moves to the first seating groove or the second seating groove and expands, and the fitting unit is compressed with the pipe inserted into the insertion port.

4. The pipe connecting device according to claim 3,
wherein the grip member is configured so that an elastic limit is not exceeded by deformation, and is configured to have an elastic restoring force in a radially outward direction.

5. The pipe connecting device according to claim 3,
wherein the grip member is formed so that a curvature of an initial state is relatively smaller than inner diameters of the first seating groove and the second seating groove.

6. The pipe connecting device according to claim 3,
wherein the grip member is configured to be able to contract into a circular shape with a diameter smaller than the insertion port.

7. The pipe connecting device according to claim 1,
wherein the grip member has a width smaller than the widths of the first seating groove and the second seating groove along a longitudinal direction, and is deformed along a tensile direction when the pipe is pulled in a direction of leaving from the fitting unit.

8. The pipe connecting device according to claim 1,
wherein a tip of the grip part is formed so that an inner side is longer than an outer side in the pipe direction to be inserted, and is formed in a tapered shape.

9. The pipe connecting device according to claim 1,
wherein the grip part is formed so that a portion protruding toward the pipe has a polygonal or semicircular shape.

10. The pipe connecting device according to claim 1,
wherein the sealing member is formed to have elasticity, is seated on the second seating groove, and is formed in a ring shape.

11. The pipe connecting device according to claim 10,
wherein a longitudinal section of the sealing member includes a main sealing region of a preset shape.

12. The pipe connecting device according to claim 11,
wherein the longitudinal section of the sealing member further includes an auxiliary sealing region that protrudes outward from the main sealing region.

13. The pipe connecting device according to claim 1,
wherein the fitting unit includes:
a first member mounting part with the first seating groove formed on an inner circumferential surface;
a second member mounting part with the second seating groove formed on an inner circumferential surface;
a groove separation part formed between the first member mounting part and the second member mounting part; and
an internal extension formed to extend inward from the second member mounting part.

14. The pipe connecting device according to claim 13,
wherein the fitting unit further includes:
an external extension that extends outward from the first member mounting part.

15. The pipe connecting device according to claim 13,
wherein the first member mounting part and the second member mounting part are formed to have an outer diameter larger than the groove separation part and the internal extension.

16. The pipe connecting device according to claim 1, further comprising:
a pressing unit which is mounted to wrap around and press the outer circumferential surface of the fitting unit.

17. The pipe connecting device according to claim 16,
wherein the pressing unit has a seating space formed therein into which the fitting unit is inserted, and includes a pressing body that wraps around and presses the outer circumferential surface of the fitting unit.

18. The pipe connecting device according to claim 17,
wherein the first member mounting part and the second member mounting part are formed to have an outer diameter larger than the groove separation part and the inner extension, and
the pressing body is formed with a first recessed groove in which the first member mounting part is seated, and a second recessed groove in which the second member mounting part is seated, along periphery of the inner circumferential surface.
